# EUROPÄISCHE PATENTANMELDUNG

(11) **EP 1 495 788 A1**
(43) Veröffentlichungstag der Anmeldung: **12.01.2005**
(21) Anmeldenummer: 04016201.8
(22) Anmeldetag: 09.07.2004
(51) Int. Cl.: B01D 29/33, B01D 29/41, B01D 29/90

(54) **Filtervorrichtung**

(30) Priorität: 10.07.2003 DE 10331459
(71) Anmelder: Rudolf, Erhard, 86698 Oberndorf (DE)
(72) Erfinder: Rudolf, Erhard, 86698 Oberndorf (DE); Glück, Markus, Dr.-Ing., 86720 Nördlingen (DE)
(74) Vertreter: Cremer, Ulrike Dr.

(57) **Zusammenfassung**

Die Erfindung betrifft eine Filtervorrichtung (1) in der Art eines Kammerfilters, mit einem Deckelmodul (170) und einem Bodenmodul (180) und einer dazwischen angeordneten Kammer, in welcher parallel zu den Modulen ein Filtermittel (106) angeordnet, insbesondere eingespannt ist, so dass zwei Kammerhälften gebildet werden. Sie weist weiter zumindest je eine Suspensionszuleitung (103, 190) und eine Suspensionsableitung (104) und zumindest eine Filtratableitung (105) auf. Es ist vorgesehen, dass die Öffnung (133, 193) der Suspensionszuleitung (103, 190) tangential angeordnet ist, so dass die Suspension der Kammer parallel oder in einem Winkel zur Filtermitteloberfläche und unter einem Winkel abweichend vom Lot zur Seitenwand des Moduls zuführbar ist.

## Beschreibung

Die vorliegende Erfindung betrifft eine Filtervorrichtung gemäß dem Oberbegriff des Anspruchs 1.

In der Patent- und Fachliteratur werden in der Regel mit den Oberbegriffen "Filtervorrichtungen" oder "Filteraufbauten" Hilfseinrichtungen bezeichnet, auf oder mit denen in einem Trägermaterial, insbesondere Flüssigkeiten oder Gase, befindliche Stoffe beliebigen Aggregatzustands (meist fest, porös, aber auch flüssig) oder Schweb- und Trübstoffe beliebigster Form vom Trägerstoff bzw. Lösungsmittel durch Filtration getrennt und entfernt werden.

Unter dem Begriff "Filtration" werden Verfahren zusammengefasst, um eine Mischung aus zwei Stoffen voneinander zu trennen. Insbesondere wird ein suspendierte Feststoff, z.B. ein Trübstoff oder Niederschlag, von der ihn umgebenden Flüssigkeit, oder eine Flüssigkeit von einer anderen Flüssigkeit, z.B. Öl von Wasser, getrennt, indem man die Mischung über ein poröses, für Flüssigkeiten bzw. nur für eine der beiden Flüssigkeiten durchlässiges Medium laufen lässt. Die Filtration ist Bestandteil grundlegender Fertigungsverfahren in der chemischen Industrie und wird für verschiedenste Zwecke eingesetzt. Die zu filtrierende Flüssigkeit wird als "Suspension" bezeichnet, die den Filter durchlaufende gereinigte Flüssigkeit wird als "Filtrat" bezeichnet. Das auf dem Filter verbleibende feste Material heißt "Rückstand" und wird auch als "Filterkuchen" bezeichnet.

Als "Filtermittel" werden geeignete Hilfsvorrichtungen, Werkstücke, Beschichtungen, Werkstoffe oder Techniken (z.B. Zentrifugen) bezeichnet, welche zur Filtration notwendig sind und mit Hilfe derer die Trennung von Filtrat und abzutrennendem Stoff, z.B. Schwebstoffen, überhaupt erst ermöglicht wird.

Mit den eingangs beschriebenen Merkmalen werden Filtervorrichtungen insbesondere in allen Anwendungsfeldern der chemischen und physikalischen Verfahrenstechnik eingesetzt. Filtermittel nehmen die in den Flüssigkeiten vorhandenen Schweb- oder Trübstoffe oder die anderen Flüssigkeiten auf und halten sie zurück. Bei Filtrationsprozessen am häufigsten zum Einsatz kommen Kornfilter (z.B. Sand oder zerkleinerte Stäube wie z.B. Aktivkohle), Filterpapier oder Gewebefilter (wie z.B. Stoffe, Vliese, Textil- oder Drahtnetzgewebe), starre poröse Filter (z.B. aus Keramikmaterial) und halbdurchlässige bzw. durchlässige Membranen (u.a. zum Beispiel auch Tierhäute).

Weiter bekannt sind sog. "Filterhilfsmittel", die eine Verstärkung des Filtereffektes und eine verbesserte Effektivität des Filtervorgangs an sich bewirken, hier beispielhaft genannt seien Katalysatoren (chem. Verstärkung), pulverartige Füllungen oder Beschichtungen (z.B. Aktivkohle, Feinstäube, Mikropartikel, verstärkte Adsorption) oder adhäsiv verstärkende Additive (z.B. Kieselgur in der Klärfiltration für Säfte und Biere).

Bekannt sind verschiedenste Realisierungsformen für Filtermittel aus allen nur erdenkbaren Materialkombinationen. Die häufigsten, zum Einsatz kommenden Materialen sind Kunststoffe, Keramiken oder Edelmetalle in verschiedenster Porosität und Grundstruktur, z.B. als Vliese oder Netze verwoben. Immer mehr an Bedeutung gewinnen lebensmitteltaugliche Kunststoffe in verschiedensten Ausführungsformen (z.B. Platten, Röhren, Membranen oder Hohlfasern bzw. Hohlfasermembranen). Aber auch Filtermaterialien oder Beschichtungen anderer Trägergeometrien mit Materialien oder porösen Dünnschichten aus Quarz (Siliziumdioxid), Silizium (Si), Saphir, hochtemperaturstabilen und sich durch geringen Partikelabrieb auszeichnenden Keramikmaterialien mit hoher mechanischer Steifigkeit sowie hochreine Kunststoffmaterialien mit vergleichbaren charakteristischen Materialeigenschaften (z.B. POM) kommen verstärkt zum Einsatz.

Eine bekannte Art an Filtervorrichtungen sind Kammerfilter und Kammerfilterpressen. Es handelt sich in beiden Fällen um statische Filter. Bei den Kammerfiltern ist ein Filtermittel zwischen zwei Kammerdeckeln eingespannt. Die zu filternde Suspension wird der Filtervorrichtung über eine der durch das Filtermittel gebildeten Kammerhälften zugeführt. Das Filtrat durchdringt das Filtermittel und verlässt die Filtervorrichtung über die zweite Kammerhälfte. Bei den Kammerfilterpressen, wie beispielsweise in der DE 195 22 133 beschrieben, kommt zu diesem System noch eine Pressmöglichkeit hinzu, mit der die einzelnen Filterelemente zusammengepresst werden, um dem Filterkuchen möglichst viel Flüssigkeit zu entziehen. Nachteilig ist an beiden Systemen, dass das Filtermittel vergleichsweise schnell zusetzt. Folglich ist vorgesehen, dass die Filtervorrichtungen immer wieder entleert werden, sprich der Filterkuchen entnommen wird. Aus der DE 198 21 279 ist ein rückspülbarer Kammerfilter bekannt. Es ist vorgesehen, dass der Filtervorrichtung von Zeit zu Zeit Rückspülflüssigkeit zugeführt wird. Dies geschieht von der Filtratseite her. Dadurch soll der Filterkuchen auf der Rückseite (von der Seite der Zufuhr der Rückspülflüssigkeit aus betrachtet) abgelöst werden. Das Öffnen der Filtervorrichtung soll damit verhindert werden, bzw. die Häufigkeit reduziert werden. Durch diesen Rückspülschritt wird der Filtrationsvorgang jedoch unterbrochen; ein kontinuierliches Filtrieren ist nicht möglich.

Zur Erhöhung der Standzeiten und v.a. zur Erhöhung der Filterleistung ist bei Filtervorrichtungen mit scheibenförmigen Filtermitteln bekannt, dass ein Überströmen der Filteroberflächen verbunden mit einem abrasiven Abtrag des Rückstands zu einer enormen Produktivitätserhöhung führt - allgemein unter dem Begriff Cross-Flow-Technologie (Querströmungstechnologie) bekannt gemacht. Daher wurde in bisherigen Filtervorrichtungen zur Erzeugung eines derartigen vorteilhaften Abtrags von Rückständen im Regelfall ein von außen über Gleitringdichtungen durch die Behälterwand geführtes Rührwerk mit in die Gesamtvorrichtung integriert, was neben dem vorteilhaften Abrieb des Filterkuchens zu bedeutsamen Nachteilen dieser Filtervorrichtungen führt. So müssen beispielsweise Filtermittel in aufwändigen drehbaren Vorrichtungen integriert werden, die neben einer hohen Masse des Rotors und der Filtermittelkolonnen, einer hohen Trägheit des Aufbaus an sich, hoher Strömungswiderstände bei der Bewegung in der zu filtrierenden Flüssigkeit und auf Grund unvermeidlicher Unwuchten und Schwingungen zu bedeutsamen Limitierungen der Überströmgeschwindigkeit und enormen Defiziten bisheriger Filteraufbauten führen. Sehr nachteilig ist der in der Regel sehr hohe Energieverbrauch. Ferner sind die Hauptschwierigkeit der Konstruktion und die Hauptfehlerquelle bei Störungen im Betrieb bedingt durch den komplex und leistungsstark auszuführenden mechanischen Motorantrieb. Gleichzeitig wird die erzielbare Überströmgeschwindigkeit auf der Filteroberfläche begrenzt, die wiederum den Abtrag des sich auf der Filteroberfläche aufbauenden Filterkuchens und damit die Produktivität der Filtervorrichtung im industriellen Einsatz beeinträchtigen. Derartige Anordnungen sind beispielsweise in den Schriften DE 41 35 359 oder DE 34 01 607 vorgestellt.

Aus den US 5,500,134 und EP 0 002 422 sind Filtervorrichtungen bekannt, bei denen die Strömung über ortsfeste Filtermittel mittels des Einstroms der Suspension erzeugt wird. Bei der US 5,500,134 geschieht dies über ein Zweikammersystem. Der Einstrom der Suspension erfolgt zunächst in die äußere Kammer und wird dann über ein durchbrochene Zwischenwand in die innere Kammer eingeleitet. Bei der EP 0 002 422 erfolgt der Einstrom der Suspension über eine separate Suspensionszuleitung, welche im Inneren des Behälters, vorzugsweise in dessen Mitte vorgesehen ist. Es wird dabei jedes der scheibenförmigen Filtermittel separat angeströmt. Nachteil dieser Filtervorrichtung ist jedoch, dass sowohl die Suspensionszuleitung als auch die Suspensionsableitung die Filtermittel durchdringen. Dadurch entstehen nicht nur bei der Herstellung hohe Kosten, infolge der Anfertigung von Filtermitteln mit entsprechend gestalteten Durchbrüchen, sondern die Zu- und Ableitungen unterbrechen die Strömung und hinter jedem Rohr, in Strömungsrichtung betrachtet, entsteht ein "Schatten", d.h. ein Bereich auf dem Filtermittel, das nicht überströmt ist und in dem sich folglich Partikel absetzen können.

Angesichts der vorangehend erläuterten Problematik ergibt sich die der Erfindung zugrundeliegende Aufgabenstellung, eine Filtervorrichtung in der Art eines Kammerfilters zu verbessern, so dass sie kontinuierlich betrieben werden kann. Es soll weiter ein dynamisch arbeitender Kammerfilter bereitgestellt werden.

Diese Aufgabe wird durch eine Filtervorrichtung nach Anspruch 1 gelöst. Vorteilhafte Ausgestaltungen der Erfindung sind Gegenstand der Unteransprüche.

Die erfindungsgemäße Filtervorrichtung ist in der Art eines Kammerfilters ausgebildet. Sie weist ein Deckelmodul und ein Bodenmodul auf. Die Filtervorrichtung weist ferner zumindest eine Kammer auf. In der Kammer ist ein Filtermittel angeordnet, welches die Kammer in zwei Kammerhälften aufteilt. Das Filtermittel kann dabei zwischen Deckel- und Bodenmodul angeordnet sein. Ferner kann auch in einem oder beiden der Module das Filtermittel in der Seitenwand befestigt sein. Sind zwei Filtermittel vorgesehen, so werden auch zwei Kammern gebildet. Die Filtervorrichtung weist weiter zumindest je eine Suspensionszuleitung und eine Suspensionsableitung und zumindest eine Filtratableitung auf. Erfindungsgemäß ist vorgesehen, dass die Öffnung der Suspensionszuleitung bzw. die Suspsensionszuleitung tangential angeordnet ist. Dadurch wird die Suspension der Kammer parallel oder in einem Winkel zur Filtermitteloberfläche und unter einem Winkel abweichend vom Lot zur Seitenwand der Kammer zugeführt. Anders ausgedrückt werden die Filtermittel tangential, d.h. schräg, überströmt. Der Ausstoß der Suspension erfolgt somit nicht senkrecht, sondern in einem davon abweichendem Winkel. Anders beschrieben wird unter dem Begriff "tangential" eine Anordnung der Öffnungen und eine Einstromrichtung der Suspension verstanden, die mit Hilfe einer Tangente näher beschrieben wird. Unter einer Tangente wird in der Geometrie eine Gerade verstanden, die einen Kreis bzw. Kreisbogen an einem einzigen Punkt berührt, ihn jedoch nicht schneidet. Nimmt man nun eine Tangente, die den Kreis an jedem beliebigen Punkt und in jeder beliebigen Orientierung berühren kann, und verschiebt diese parallel in Richtung zum Mittelpunkt des Kreises, so überquert die Tangente den Kreis. Zu beachten ist, dass die Parallelverschiebung nicht bis exakt zum Mittelpunkt erfolgen darf, sondern nur jeweils bis unmittelbar davor. Betrachtet man den Kreis als Seitenwand der Kammer, so sind Bohrungen, die an diesen Schnittpunkten dem Verlauf der Tangente folgend gesetzt werden, tangential angeordnet. Durch den tangentialen Einstrom führt die Suspension eine kreisförmige Bewegung über dem Filtermittel aus. Dadurch wird ein Cross-Flow über dem Filtermittel erzielt, der vorteilhaft zu einer Abrasion des Filterkuchens führt. Im Betrieb wird die Suspension der Filtervorrichtung über die Öffnungen der Suspensionszuleitung zugeführt. Sie überströmt die Filtermittel und wird dabei filtriert. Filtrat tritt durch das Filtermittel hindurch und wird abgeführt. Die Suspension verlässt die Filtervorrichtung wieder und wird dieser erneut zugeführt. Folglich wird die erfindungsgemäße Filtervorrichtung kontinuierlich betrieben. Es wird fortlaufend Suspension zu- und abgeführt und es wird laufend Filtrat abgeführt. Durch das beständige Strömen der Suspension handelt es sich ferner um eine dynamisch betriebene Filtervorrichtung in der Art eines Kammerfilters. Infolgedessen übernimmt die neuartige Filtervorrichtung von dem bekannten Kammerfilter lediglich die Anordnung von Deckel- und Bodenmodul und Filtermittel. Ihre Betriebsweise ist jedoch mit diesem in keinster Weise zu vergleichen. Die erfindungsgemäße Filtervorrichtung weist weiter den Vorteil auf, dass sie vergleichsweise günstig in der Herstellung ist. Als Filtermittel eignen sich sämtliche bekannten Filtertücher und -papiere, insbesondere solche, die als Meterware erhältlich sind. Dadurch kann die erfindungsgemäße Filtervorrichtung in beliebigen Größen und Durchmessern hergestellt werden. Ferner weist sie die oben geschilderten Vorteile der dynamischen und kontinuierlichen Betriebsweise auf, was von bekannten Kammerfiltern unbekannt ist.

Die Suspensionszuleitung kann erfindungsgemäß in der Seitenwand jedes Moduls angeordnet sein, so dass die Suspension der Kammer von ihrem Umfang her zuströmt. Die Suspensionszuleitung kann jedoch auch im Inneren der Filtervorrichtung angeordnet sein. Dies kann sowohl zentral erfolgen, das heißt ungefähr in der Mitte der Filtervorrichtung, als auch außermittig an jeder beliebigen und geeigneten Stelle. Die Suspension strömt in diesem Falle vom Inneren der Kammer in Richtung zur Seitenwand der Kammer. Ferner kann eine erfindungsgemäße Filtervorrichtung sowohl eine oder mehrere Suspensionszuleitungen in der Seitenwand jedes Moduls als auch eine oder mehrere Suspensionszuleitungen im Inneren der Kammer aufweisen. Diese Anordnung ist beispielsweise besonders bei Filteraufbauten mit sehr großem Durchmesser vorteilhaft, da durch den Einstrom der Suspension, sowohl von der Außenseite als auch von der Innenseite her, der gesamte Filterquerschnitt und damit die gesamte Oberfläche des Filtermittels tangential überströmt wird, wodurch überall ein gleichmäßiger Cross-Flow erzielt wird. Der Partikelabtrag ist damit besonders effizient und eine Schattenbildung wird möglichst verhindert.

Bevorzugt kommen zum Deckel- und Bodenmodul noch weitere Filtermodule hinzu, die zwischen den erstgenannten Modulen angeordnet sind. Jedes Filtermodul weist zumindest eine Suspensionszuleitung, eine Suspensionsableitung, ein Filtermittel und eine Filtratableitung auf. Das Filtermittel ist entsprechend in dem Filtermodul angeordnet, insbesondere eingespannt, so dass weitere Kammern bzw. Kammerhälften gebildet werden. Alternativ kann das Filtermittel auch zwischen einzelnen Filtermodulen angeordnet sein, ähnlich wie oben beschrieben für die Grundform des erfindungsgemäßen Filters, nämlich der bestehend aus Boden- und Deckelmodul. Der Vorteil des modularen Aufbaus ist, dass eine beliebige Anzahl an Filtermodulen mit einem Deckel- und Bodenmodul zu einer erfindungsgemäßen Filtervorrichtung zusammengesetzt werden können. Hierdurch lassen sich Filter unterschiedlichster Leistungsklassen zusammensetzen. So können in einzelnen Filtermodulen Filtermittel für die Grobfiltration und in anderen für eine feinere Filtration vorgesehen sein, wobei das Filtrat dann bevorzugt von einer Reinigungsstufe zur nächsten geführt werden kann.

Bevorzugt werden Filtermembranen mit dazwischen liegendem Drainagegewebe zum Filtermittel für die Verwendung in der erfindungsgemäßen Filtervorrichtung verbunden. Dadurch ist es möglich das Filtrat über das Filtermittel von jedem Modul abzuleiten, ohne dass die Kammern benachbarter Module voneinander separiert werden müssen. Diese Filtermembran ist als Meterware erhältlich und kann in der gewünschten Größe zugeschnitten werden, wodurch sich die erfindungsgemäße Filtervorrichtung beliebig dimensionieren läßt. Es sind damit auch Durchmesser aufzubauen, die mit anderen Filtermitteln, insbesondere mit Keramikhohlfilterscheiben, die derzeit in sehr begrenzten Durchmessergrößen auf dem Markt erhältlich sind, nicht aufgebaut werden können. Folglich weist diese Anordnung die Vorteile der Kostengünstigkeit und der großen Unabhängigkeit auf.

Schließlich sieht ein weiteres bevorzugtes Ausführungsbeispiel eine Pressmöglichkeit für eine erfindungsgemäße Filtervorrichtung vor, ähnlich wie die bekannten Kammerfilterpressen. Hierfür ist zwischen den Membranen des Filtermittels eine undurchlässige Wandung angeordnet. Ferner sind die sie begrenzenden Filtermembranen flexibel gestaltet sind. Alternativ könnte auch zusätzlich jeweils eine flexible Membran zu beiden Seiten der undurchlässigen Wandung vorgesehen sein. Es ist dann Druck anlegbar, so dass sich die flexiblen Membranen in Richtung zur Kammer aufblähen und sich benachbarte flexible Membranen einander nähern, so dass dazwischen befindlicher Rückstand ausgepresst werden kann.

Zur praktischen Umsetzung der Erfindung sind mehrere Realisierungsformen denkbar, die allesamt in Cross-Flow-Technologie betrieben werden. Im Folgenden wird die Erfindung an Hand von Ausführungsbeispielen unter Bezugnahme auf die schematischen Zeichnungen der folgenden Figuren näher erläutert. Es zeigen:
Fig. 1: einen Längsschnitt durch ein bevorzugtes Ausführungsbeispiel der Erfindung;
Fig. 2: eine Draufsicht auf ein Filtermodul der Filtervorrichtung der Fig. 1;
Fig. 3: das Detail IV in Fig. 1;
Fig. 4: einen Querschnitt eines weiteren Ausführungsbeispiels einer Filtervorrichtung; und
Fig. 5: einen Querschnitt noch eines weiteren Ausführungsbeispiels einer Filtervorrichtung.

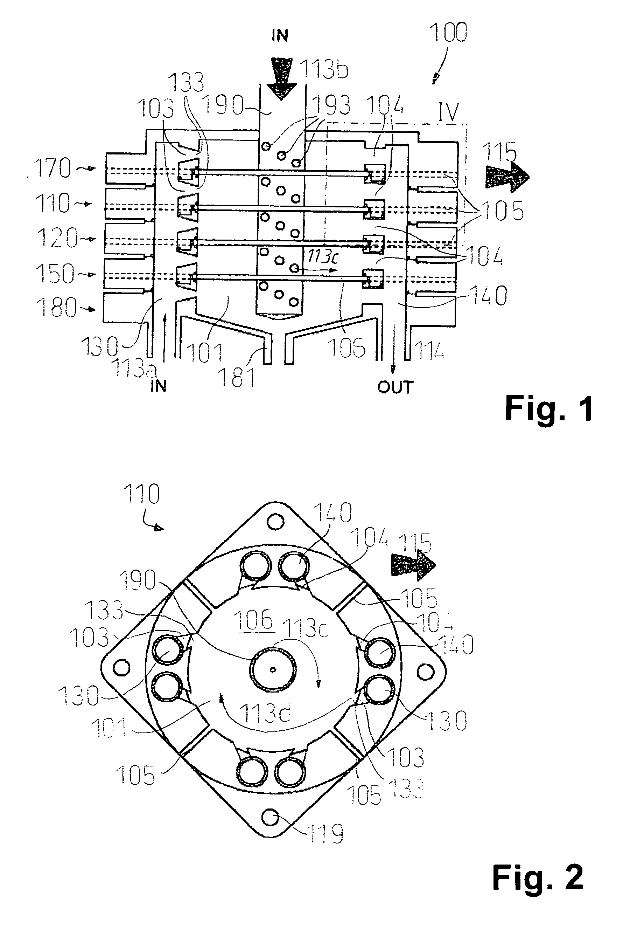

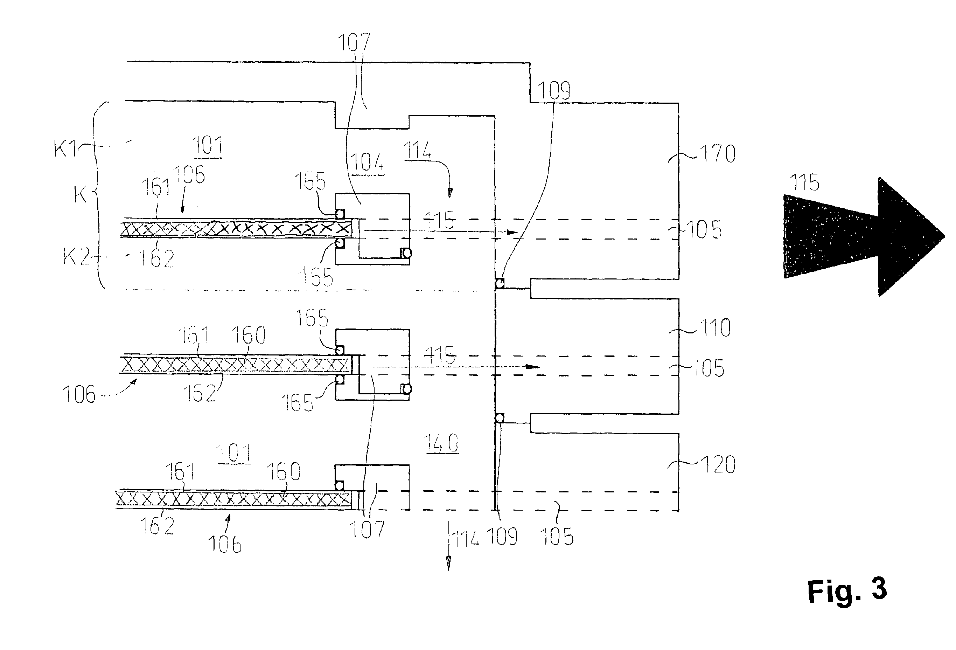

Anhand der Fig. 1 - 3 wird ein bevorzugtes Ausführungsbeispiel der Erfindung beschrieben. In Fig. 1 ist eine Filtervorrichtung 100 dargestellt, bei der drei Filtermodule 110, 120, 150 hintereinander angeordnet und miteinander verbunden sind, insbesondere über Verschraubungen 119. Figur 2 zeigt eine Draufsicht auf das Filtermodul 110. Neben den Filtermodulen 110, 120, 150 weist die Filtervorrichtung 100 ein Deckelmodul 170 und ein Bodenmodul 180 auf. Zwischen den einzelnen Filtermodulen ist jeweils ein Filtermittel 106 angeordnet. Aus der Fig. 1 wird deutlich, dass zur Ausführung der Erfindung die Anordnung des Deckelmoduls 170 und des Bodenmoduls 180 mit einem dazwischen angeordneten Filtermittel 106 zu einer Filtervorrichtung ausreichend ist. Aus dem Detail der Fig. 3 geht die Anordnung des Filtermittels 106 und sein Aufbau hervor. Das Filtermittel 106 besteht aus zwei Membranen 161, 162, zwischen denen ein Drainagegewebe 160 angeordnet ist. Hierbei kann es sich beispielsweise um ein Edelstahlgewebe, ein Lochblech oder einen porösen Kunststoff handeln. Die Membranen 161, 162 bestehen beispielsweise aus Papier, Polysulfon oder Polytetrafluorethylen, oder es handelt sich um Keramikflachmembranen oder Edelstahlvliesmembranen vorgesehen ist. Anders ausgedrückt ist für den Fachmann ersichtlich, dass jede geeignete Filtermembran eingesetzt werden kann. Das zusammengesetzte Filtermittel 106 wird in der Seitenwand 107 jedes Filtermoduls befestigt und abgedichtet, beispielsweise mit zwei O-Ringen 165. Aus Fig. 3 wird weiter die Kammerbildung deutlich. Das Deckelmodul 170, als Beispiel angeführt, weist eine Kammer K auf. Durch das Filtermittel 106 wird diese in die beiden Kammerhälften K1 und K2 aufgeteilt. Die Kammerhälfte K2 liegt wiederum benachbart zu eine der Kammerhälften des Filtermoduls 110. Eine gesonderte Abtrennung ist im Ausführungsbeispiel der Fig. 1-3 nicht vorgesehen und aufgrund des Abführens des Filtrats über das Drainagegewebe 160 und dann über die Filtratableitung 105 nicht notwendig. Wird jedoch beispielsweise Filterpapier oder - tuch ohne Drainagegewebe verwendet, so ist es vorteilhaft, die einzelnen Filtermodule abzutrennen und dann in einer der Kammerhälften Suspension zuzuführen und in der anderen abzuleiten. Der Einstrom der Suspension erfolgt bei der Filtervorrichtung 100 über eine Suspensionssammelzuleitung 130, die über die Öffnungen 133 der Suspensionszuleitungen 103 im Innenraum 101 mündet. Dieser Weg der Zuleitung der Suspension ist mit dem Pfeil 113a dargestellt. Die Suspension kann der Filtervorrichtung weiterhin über die zentrale Suspensionszuleitung 190 und darin angeordnete Öffnungen 193 zugeführt werden. Dies ist dargestellt durch den Pfeil 113b. Aus den Öffnungen 193 strömt die Suspension in den Innenraum 101 und überströmt die Filtermittel 106, angedeutet durch den Pfeil 113c. Die Suspension wird über die Suspensionsableitung 104, welche in der Suspensionssammelableitung 140 mündet, abgeleitet. Alternativ kann auch die Suspensionsableitung, bzw. kann die Suspensionsableitung anstelle der Suspensionszuleitung 190 im Inneren der Filtervorrichtung 100 vorgesehen sein. Folglich würde bei einer derartigen Filtervorrichtung die Suspension über in der Seitenwand jedes Moduls angeordnete Suspensionszuleitungen 103 eingeströmt werden. Die Ableitung der Suspension erfolgt dann nicht über in der Seitenwand angeordnete Suspenstionsableitungen 104 sondern über eine zentrale Suspensionsableitung, die an der Stelle der zentralen Suspensionszuleitung vorgesehen ist. Das Filtrat verläßt die Filtrationsvorrichtung 100 über die Filtratableitung 105. Im Ausführungsbeispiel der Fig. 1 - 3 sind pro Filtermodul gesonderte Filtratableitungen 105 vorgesehen. Es ist ferner zumindest eine Filtratableitung 105 pro Filtermodul vorgesehen.

Genauer sind im Ausführungsbeispiel der Fig. 1 vier Filtratableitungen 105 pro Filtermodul 110, 120, 150 und im Deckelmodul 170 vorgesehen. Die Filtratableitung ist durch den Pfeil 115 dargestellt. Aus der Draufsicht der Fig. 2 ergibt sich nicht nur die Anordnung der Filtratableitung 105, sondern auch die Anordnung der Suspensionszu- und ableitungen. Deutlich wird vor allem deren tangentiale Anordnung. Es erfolgt folglich sowohl die Zu- als auch die Ableitung an Suspension tangential. Im Ausführungsbeispiel der Fig. 2 sind die Suspensionszuleitungen 103 und die Suspensionsableitungen 104 sowohl links- als auch rechtstangential angeordnet. Die Ausrichtung kann jedoch auch gleichsinnig sein, sowohl untereinander als auch zu jeweils der anderen Gruppe. Die Filtration erfolgt, indem Suspension in die Filtervorrichtung eingeströmt wird über die Öffnungen 133 der Suspensionszuleitung 103 und die Öffnungen 193 der Suspensionszuleitung 190. Die Suspension wird durch die Membranen 161, 162 hindurch gefiltert. Das Filtrat wird abgeleitet über das Drainagegewebe 160 und die Filtratableitungen 105. Sollten sich größere Partikelmengen ansammeln, so können diese durch den Partikelablass 181 im Bodenmodul 180 abgelassen werden. Es wird darauf hingewiesen, dass die zentrale Suspensionszuleitung 190, d. h. die Suspensionszuleitung im Inneren der Filtervorrichtung 100, auch entfallen kann. Für den Betrieb der Filtervorrichtung 100 ist es ausreichend, einen Einstrom an Suspension über die Suspensionssammelzuleitung 130 und die Suspensionszuleitungen 103 durchzuführen. Das zusätzliche Einbringen von Suspension über die zentrale Suspensionszuleitung 190 bringt dann Vorteile, wenn vergleichsweise große Filtermitteldurchmesser gewünscht werden. Alternativ können auch die Suspensionszuleitungen 103 entfallen, sodass die Zufuhr der Suspension lediglich über die zentrale Suspensionszuleitung 190 und die darin vorhandenen Öffnungen 193 erfolgt. Die Öffnungen 193 können auch besonders gestaltet sein, sodass diese dann als Düsen bezeichnet werden können.

Wie bereits erwähnt erfolgt der Einstrom der Suspension über die Öffnungen 133 bzw. 193 der Suspensionszuleitungen 103 bzw. 190 tangential. Anders ausgedrückt erfolgt der Einstrom nicht senkrecht zur Seitenwand 107 jedes Moduls 110, 120, 150, 170, 180, sondern in einem davon abweichenden Winkel, sozusagen schräg, dargestellt in Fig. 2 durch die Pfeile 113c und 113d. Folglich steht die Längsachse der Öffnungen oder Düsen nicht senkrecht auf der Fläche, die parallel zu ihrem Ansatzpunkt an der Supensionszuleitung liegt, sondern in einem davon abweichendem Winkel. Dieser von dem Lot abweichende Winkel kann in Abhängigkeit von der Anwendung und von den Größen der Filtervorrichtung beliebig gewählt werden. Exemplarisch seien Abweichungen in einer Größenordnung von 5°-60° genannt. Die Öffnungen bzw. Düsen der Suspensionszuleitung sind, anders ausgedrückt, schräg angeordnet und ausgerichtet. Durch die tangentiale Ausrichtung und Anordnung der Öffnungen 133, 193 der Suspensionszuleitungen 103, 190 wird die Suspension über jedem Filtermittel 106 beschleunigt und vollzieht auf diesen jeweils eine kreisförmige Bewegung, wie angedeutet durch die Pfeile 113c, 113d. Jedem Filtermittel 106 ist zumindest eine Öffnung 133 oder 193 zugeordnet. Es wird darauf hingewiesen, dass bevorzugt mehrere Öffnungen 133 und/oder 193 pro Filtermittel 106 vorgesehen sind. Von jeder der Öffnungen geht dann ein tangentialer, sich kreis- bzw. spiralförmig über dem Filtermittel 106 bewegender Suspensionsstrom aus. Somit ist die gesamte Filtermitteloberfläche gleichmäßig überströmt. Durch die Strömung der Suspension über das Filtermittel 106 wird dessen Oberfläche von Partikeln freigehalten. Es erfolgt folglich auf Grund der Rotationsbewegungen der zu filternden Suspension über der Filtermitteloberfläche und damit wirkender Zentrifugalkräfte eine Schwimmtrennung, welche wiederum zu einem Abtransport losgeschlagener bzw. in Lösung befindlicher Filterrückstände und Schwebstoffe führt. Diese gelangen gezielt in einen Raumbereich, wo sie entweder aufkonzentriert oder lokal abgesaugt werden können und nicht unmittelbar zur Verstopfung der Filteroberflächen führen. Der Einsatz aus einer oder mehreren Düsen bestehender Einlassvorrichtungen, die Öffnungen 133, 193 Suspensionszuleitungen 103, 190, führt auf Grund des erheblich verringerten Querschnitts von typischerweise wenigen Millimetern zu erhöhten Strömungsgeschwindigkeiten und - unter Einbeziehung spezieller Formgebung (z.B. Drall) - zu einem wesentlich verbesserten Abtrag von Filterrückständen an der Filteroberfläche mittels Abrasion. Die Überströmgeschwindigkeiten erreichen dadurch ein Vielfaches der ansonsten durch Rührwerke erzielbaren Werte. Sie können aus einer bzw. mehreren Einzeldüsen bestehen oder können Konfigurationen annehmen, die aus mehreren Düsen bestehen (z.B. schwenkbare oder quasi-stationäre Kammstrukturen). Sie sind punktförmig an verschiedenen Positionen in der Filtervorrichtung angeordnet und sind ggf. mit verschiedenen Drücken, Durchmessern und Anströmgeschwindigkeiten beaufschlagbar, um Strömungsform und Überströmgeschwindigkeiten an der Filtermitteloberfläche gezielt zu beeinflussen und zu erhöhen. Wie oben ausgeführt, ist zumindest eine Suspensionszuleitung und eine entsprechende Suspensionsableitung pro Filtermittel vorgesehen. Es ist jedoch auch vorgesehen, dass mehrere angeordnet werden, wie in Fig. 1 dargestellt. Gerade durch das Vorsehen von mehreren bis vielen Suspensionszuleitungen pro Filtermittel 106, wird eine effektive Überströmung der Filtermittel erzielt. Sind diese gleichmäßig verteilt über die Seitenwand 107 jedes Filtermoduls und/oder über den Umfang der zentralen Suspensionszuleitung 190, so wird dieser Effekt weiter verbessert. Die Öffnungen 133, 193 können zu einen annähernd gleichmäßig horizontal verteilt angeordnet werden (vgl. Öffnungen 133 der Fig. 2), zum anderen können die einem Filtermittel 106 zugeordneten Suspensionszuleitungen bzw. deren Öffnungen in verschiedenen Höhen angeordnet sein. Diese Art der Anordnung ergibt sich besonders gut aus der Fig. 1, wo die Öffnungen 193 in unterschiedlichen Höhen angeordnet sind. Dadurch variiert der Einstrom der Suspension, was den Abtrag an Partikeln weiter verbessert. Allgemein ausgedrückt, erfolgt die Filteranordnung derart, dass zwei Freiheitsgrade als unabhängige, frei einstellbare Parameter - Druck und Anströmgeschwindigkeit - zur Verfügung stehen, um beides, die Filterleistung und den Grad des Rückstandsabtrags (sog. Abrasion) auf der Filteroberfläche mittels "Cross Flow" zu beeinflussen. Einflussparameter werden über die Anströmgeschwindigkeit und die Druckverhältnisse in der Filtervorrichtung sowie in den Suspensionszu- und ableitungen gesetzt. Das Filtrationsverfahren kann durch weitere Regenerations- bzw. Reinigungsschritte ergänzt werden. So kann durch eine Pulsation der Anströmgeschwindigkeit, pulsartige Luftbeimischung, Ultraschall oder sonstige mechanische Schwingungserregung an Teilen der Filtervorrichtung 1 bzw. des Gesamtaufbaus (Beispiel: schwingende Lagerung, Rüttelwerke, Unwuchten, Exzentereinsatz, etc.) eine Verbesserung der Abrasion erzielt werden.

Eine weitere bevorzugte Ausbildung sieht vor, dass Elemente zwischen den Filtermittel angeordnet werden, die im Zusammenhang mit der vorliegenden Erfindung als "Einströmer" bezeichnet werden. Dieser ist um die zentrale Suspensionszuleitung 190 herum angeordnet. Der Einströmer weist ein ringförmiges Lager und Fortsätze auf, mit denen zu filterndes Abwasser über die Oberfläche der Filtermittel führbar ist. Anders ausgedrückt, handelt es sich hierbei um kurze Leitungsstücke mit Öffnungen, die auf die Filtermitteloberfläche gerichtet sind. Diese Leitungen ragen von der zentralen Suspensionszuleitung ausgehend in Richtung zum Umfang des Filtermittels, in der Art von Strahlen. Sie sind bevorzugt drehbar gelagert, wobei jedoch der Antrieb für die Drehbewegung nicht aus energieverbrauchenden Vorrichtungen, wie Motoren etc. resultiert, sondern diese Einströmer drehen sich von selbst, bedingt durch den Ausstoß an Suspension. Durch den Ausstoß der Suspension kommt eine Drehbewegung der Einströmer zustande, wodurch die gesamte Filtermitteloberfläche im Laufe der Zeit überstrichen wird und somit überall gleichmäßig von Rückständen freigehalten wird. Derartige Einströmer können auch zusätzlich zu den oben erwähnten Öffnungen, über die eingeströmt wird, vorgesehen sein.

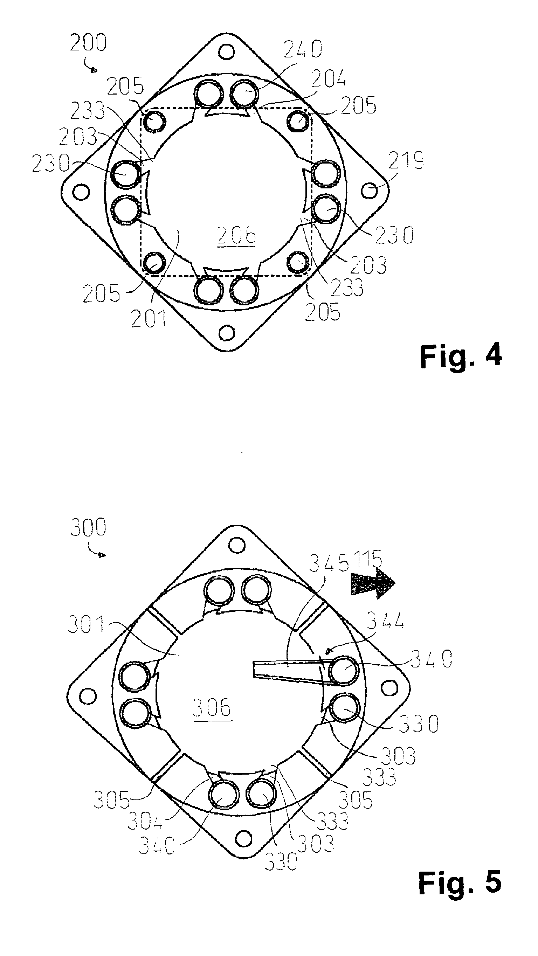

Figur 4 zeigt eine Draufsicht auf ein Ausführungsbeispiel einer Filtervorrichtung 200, bei dem die Filtratableitung nicht seitlich aus den Filtermodulen heraus erfolgt, sondern über die Filtratableitung 205. Die Möglichkeiten und Funktionen sind ansonsten identisch zu den anhand der Fig. 1 - 3 beschriebenen. Vorgesehen sind ebenfalls Suspensionszuleitungen 203 mit Öffnungen 233 und Suspensionsableitungen 204. Die Suspension wird der Suspensionszuleitung 203 über eine Suspensionssammelzuleitung 230 zugeführt. Eine zentrale Suspensionszuleitung ist im Ausführungsbeispiel der Fig. 4 nicht vorgesehen, jedoch ebenso möglich, sowohl zusätzlich als auch alternativ. Die Ableitung erfolgt gesammelt in der Suspensionssammelableitung 240. Die einzelnen Module werden ebenfalls mit Hilfe von Verschraubungen 219 oder ähnlichem verbunden. Die Filtermittel 206 werden ebenfalls tangential überströmt, wodurch auf diesen ein Cross-Flow erzeugt wird.

Figur 5 zeigt eine Draufsicht auf noch ein Ausführungsbeispiel einer Filtervorrichtung 300. Die Möglichkeiten und Funktionen sind im Allgemeinen identisch zu den anhand der Fig. 1 - 3 beschriebenen. Vorgesehen sind ebenfalls Suspensionszuleitungen 303 mit Öffnungen 333 und Suspensionsableitungen 304. Die Suspension wird der Suspensionszuleitung 303 über eine Suspensionssammelzuleitung 330 zugeführt. Die Ableitung erfolgt gesammelt in der Suspensionssammelableitung 340. Die Filtermittel 306 werden ebenfalls tangential überströmt, wodurch auf diesen ein Cross-Flow erzeugt wird. Wie bei dem Ausführungsbeispiel der Fig. 1 -3 erfolgt die Ableitung des Filtrats über die Filtratableitung 305. Abweichend von den übrigen Ausführungsbeispielen kann nun zumindest eine Suspensionsableitung 304, in der Fig. 6 mit dem Bezugszeichen 344 bezeichnet, besonders ausgebildet sein. Die Suspensionsableitung 344 erstreckt sich vergleichsweise weit in den Innenraum 301 hinein. Die Suspensionsableitung weist einen verlängerten Auslass 345 auf. Dies ist dann vorteilhaft, wenn sich aufgrund sehr hoher Strömungsgeschwindigkeit eine Gasblase im Zentrum der Filtervorrichtung ausbildet, wodurch in diesem Bereich die Strömung unterbrochen wird. Mit Hilfe des verlängerten Auslasses 345 der Suspensionsableitung 344 wird diese Gasblase aufgelöst und dort angesammelte Luft kann darüber der Filtervorrichtung entnommen werden. Ferner können auch eine oder mehrere Suspensionszuleitungen 303 in Richtung zum Zentrum hin verlängert werden, wodurch ein Einstrom an Suspension zentral erfolgen kann, obwohl keine zentrale Suspensionszuleitung 190 vorgesehen sein muss. Vorzugsweise werden lediglich einzelne Suspensionszuleitungen 303 so verlängert ausgebildet. Dadurch werden jeweils verschiedene Oberflächenbereiche des Filtermittels 306 angeströmt.

Anhand der Fig. 1-3 soll noch ein weiteres Ausführungsbeispiel der Erfindung erläutert werden. Es kann auch, ähnlich wie bei den bekannten Kammerfilterpressen, zusätzlich noch eine Pressmöglichkeit vorgesehen sein. Hierfür ist in dem Filtermittel 106 zwischen den Membranen 161, 162 eine undurchlässige Wandung vorgesehen und ferner jeweils eine flexible Membran, bzw. die Membranen 161, 162 sind flexibel gestaltet. Wird Druck angelegt, so blähen sich diese flexiblen Membranen auf in Richtung zur Kammer K und pressen Rückstände, die sich auf ihnen bzw. den Membranen 161, 162 befinden, aus. Hierfür nähern sich die Membranen jeweils benachbarter Filtermittel einander an. Ähnlich den bekannten Kammerfilterpressen wird die Filtervorrichtung 100 nun auseinandergefahren, sprich die einzelnen Filtermodule 110, 120, 150, 170, 180 werden an den O-Ringen 109 voneinander getrennt. Der ausgepresste Filterkuchen kann dann entnommen werden bzw. fällt heraus. Anschließend wird die Filtervorrichtung 100 wieder geschlossen und kann weiter betrieben werden. Diese Pressmöglichkeit kann zusätzlich vorgesehen sein und kann sich beispielsweise bei Filtern von sehr feststoffhaltigen Suspensionen als vorteilhaft herausstellen. Ansonsten wird durch den Cross-Flow-Betrieb die Filtermitteloberfläche generell von dem Zusetzen freigehalten, so dass die Pressmöglichkeit allgemein nicht notwendig sein dürfte.

Zur weiteren Verstärkung des Filterkuchenabtrags kann eine Gaszuführleitung vorgesehen sein. Diese kann beispielsweise identisch sein mit einer in der Filtervorrichtung vorgesehenen Überlaufleitung. Durch die Gaszuführleitung wird dem Inneren der Filtervorrichtung Gas, insbesondere Luft, zugeführt. Diese Luftzufuhr kann zeitweilig, insbesondere in Intervallen, erfolgen oder auch kontinuierlich. Durch das Einbringen von Luft, beispielsweise mit einem geringen Überdruck, erhöht sich die Strömungsgeschwindigkeit bei gleichbleibender Pumpleistung und gleichbleibendem Gesamtdruck. Ferner bilden sich Verwirbelungen, wodurch sich der Filterkuchen löst. Die Dauer des Lufteintrags kann sehr kurz sein; ein Einblasen von Luft im Sekundenbereich erwies sich in Versuchen bereits als ausreichend. Die Luftzufuhr kann jedoch auch länger dauern, sogar kontinuierlich erfolgen, was von der zu filternden Suspension letztlich abhängt. Bereits der in einer bis wenigen Sekunden eingebrachte minimale Luftanteil genügt, um abgelagerte Partikel zu verwirbeln und in Suspension zu bringen. Durch die zerplatzenden und sich neu bildenden Luftblasen wird die Wassersäule verwirbelt. Die Gaszuführleitung kann mit bereits vorhandenen Komponenten, beispielsweise der Überlaufleitung, wie oben ausgeführt, identisch sein. Ähnlich könnte sie auch beispielsweise mit einer Suspensionszuleitung identisch sein. Schließlich kann auch eine separate Gaszuführleitung angeordnet werden.

## Patentansprüche

1. Filtervorrichtung in der Art eines Kammerfilters, mit einem Deckelmodul und einem Bodenmodul und einer dazwischen angeordneten Kammer, in welcher parallel zu den Modulen ein Filtermittel angeordnet, insbesondere eingespannt ist, so dass zwei Kammerhälften gebildet werden, wobei die Filtervorrichtung weiter aufweist, zumindest je eine Suspensionszuleitung und eine Suspensionsableitung und zumindest eine Filtratableitung,
**dadurch gekennzeichnet, dass**
die Öffnung (133, 193, 233, 333) der Suspensionszuleitung (103, 190, 203, 303) und/oder die Suspensionszuleitung tangential angeordnet ist.

2. Filtervorrichtung nach Anspruch 1, **dadurch gekennzeichnet, dass**
zumindest ein, insbesondere mehrere Filtermodule (110, 120, 150) zwischen dem Deckelmodul (170) und dem Bodenmodul (180) angeordnet sind, wobei jedes Filtermodul ein Filtermittel (106, 206, 306) aufweist, das in dem Filtermodul angeordnet, insbesondere eingespannt ist, so dass weitere Kammern gebildet werden, und wobei jedes Filtermodul zumindest je eine Suspensionszuleitung (103, 190, 203, 303) und -ableitung (104, 204, 304) und eine Filtratableitung (105, 205, 305) aufweist.

3. Filtervorrichtung nach Anspruch 1 oder 2, **dadurch gekennzeichnet, dass**
die Suspensionszuleitung (190) im Inneren der Filtervorrichtung angeordnet ist, so dass die Suspension der Kammer (K) vom Inneren der Filtervorrichtung (100, 200, 300) her zuführbar ist.

4. Filtervorrichtung nach Anspruch 1 oder 2, **dadurch gekennzeichnet, dass**
die Suspensionszuleitung (103, 203, 303) in der Seitenwand (107) des Moduls (110, 120, 150, 170, 180) angeordnet ist, so dass die Suspension der Kammer (K) von dem Umfang der Filtervorrichtung (100, 200, 300) her zuführbar ist.

5. Filtervorrichtung nach Anspruch 1 oder 2, **dadurch gekennzeichnet, dass**
zumindest eine Suspensionszuleitung (190) im Innenraum (101, 201, 301) der Filtervorrichtung angeordnet ist, so dass die Suspension der Kammer vom Inneren der Filtervorrichtung her zuführbar ist, und dass zumindest eine weitere Suspensionszuleitung (103, 203, 303) in der Seitenwand jedes Moduls angeordnet ist, so dass die Suspension der Kammer zusätzlich von dem Umfang der Filtervorrichtung her zuführbar ist.

6. Filtervorrichtung nach einem der vorangegangenen Ansprüche, **dadurch gekennzeichnet, dass**
annähernd gleichmäßig verteilt jedem Filtermittel (106, 206, 306) mehrere Suspensionszuleitungen (103, 190, 203, 303) und Suspensionsableitungen (104, 204, 304, 344) zugeordnet sind.

7. Filtervorrichtung nach Anspruch 6, **dadurch gekennzeichnet, dass**
die Suspensionszuleitungen und/oder Suspensionsableitungen auf unterschiedlichen Höhen einer Kammer (K) angeordnet sind.

8. Filtervorrichtung nach einem der vorangegangenen Ansprüche, **dadurch gekennzeichnet, dass**
die Öffnung (133, 233, 333, 193) der Suspensionszuleitung (103, 190, 203, 303) als Düse ausgebildet ist, insbesondere als Punktdüse, Flachdüse oder eine Düse mit beweglichem, insbesondere rotierendem Düsenstrahl, oder als Venturi-Düse.

9. Filtervorrichtung nach einem der vorangegangenen Ansprüche, **dadurch gekennzeichnet, dass**
die Öffnung der Suspensionszuleitung links- und/oder rechtstangential angeordnet ist, insbesondere, dass in einer Filtervorrichtung (100, 200, 300) sowohl links- als auch rechtstangentiale Öffnungen vorgesehen sind.

10. Filtervorrichtung nach Anspruch 2 **dadurch gekennzeichnet, dass**
die Suspensionszuleitungen und/oder die Suspensionsableitungen hintereinander angeordneter Module über zumindest eine Suspensionssammelzuleitung (130, 230, 330) und/oder zumindest eine Suspensionssammelableitung (140, 240, 340) verbindbar sind.

11. Filtervorrichtung nach einem der vorangegangenen Ansprüche, **dadurch gekennzeichnet, dass**
das Filtermittel (106) zwei Membranen (161, 162) aufweist, zwischen denen ein Drainagegewebe (160), insbesondere ein Edelstahlgewebe, Lochblech oder poröser Kunststoff, angeordnet ist.

12. Filtervorrichtung nach Anspruch 11, **dadurch gekennzeichnet, dass** die Membranen aus Papier, Polysulfon oder Polytetrafluorethylen besteht, oder dass eine Keramikflachmembran oder Edelstahlvliesmembran vorgesehen ist.

13. Filtervorrichtung nach Anspruch 11 oder 12, **dadurch gekennzeichnet, dass**
zwischen den Membranen (161, 162) eine undurchlässige Wandung angeordnet ist, dass die Membranen (161, 162) flexibel gestaltet sind und/oder dass zusätzlich jeweils eine flexible Membran zu beiden Seiten der undurchlässigen Wandung vorgesehen sind, und dass Druck anlegbar ist, so dass sich die flexiblen Membranen in Richtung zur Kammer (K) aufblähen und sich benachbarte flexible Membranen einander nähern, so dass dazwischen befindlicher Rückstand ausgepresst werden kann.

14. Filtervorrichtung nach einem der vorangegangenen Ansprüche, **dadurch gekennzeichnet, dass**
der Filtervorrichtung Gas, insbesondere Luft zuführbar ist, insbesondere über eine Gaszuführleitung, wobei die Luft zeitweilig, insbesondere in Intervallen, oder fortwährend zuführbar ist.

15. Filtervorrichtung nach einem der vorangegangenen Ansprüche, **dadurch gekennzeichnet, dass**
zumindest eine Suspensionsableitung (344) und/oder eine Suspensionszuleitung einen verlängerten Auslass (345) aufweist.

16. Filtervorrichtung nach einem der Ansprüche 3-15, **dadurch gekennzeichnet, dass** um die im Inneren der Filtervorrichtung angeordnete Suspensionszuleitung (190) herum, insbesondere um ein Zentralrohr, das die zumindest eine Suspensionzuleitung aufnimmt, zwischen den Filtermitteln (106, 206, 306) zumindest jeweils ein Einströmer angeordnet ist, wobei dieser ein ringförmiges Lager und Fortsätze aufweist mit einer Suspensionszuleitung und entsprechenden Öffnungen, über die zu filterndes Abwasser über die Oberfläche der Filtermittel führbar ist.
